# EUROPEAN PATENT SPECIFICATION

(11) **EP 1 732 404 B1**
(45) Date of publication and mention of the grant of the patent: **05.12.2007**
(21) Application number: 05729561.0
(22) Date of filing: 01.03.2005
(51) Int. Cl.: A23L 1/237, A23L 1/00

(54) **WATER-SOLUBLE TABLETS OF NATURAL FOOD-GRADE SEA SALT AND METHOD FOR THEIR PREPARATION**
WASSERLÖSLICHE TABLETTEN AUS NATÜRLICHEM MEERSALZ IN NAHRUNGSMITTELQUALITÄT UND VERFAHREN ZU IHRER HERSTELLUNG
PASTILLES SOLUBLES DANS L'EAU DE SEL DE MER NATUREL A QUALITE ALIMENTAIRE ET LEUR PROCEDE DE PREPARATION

(30) Priority: 22.03.2004 IT MI20040545
(43) Date of publication of application: 20.12.2006
(73) Proprietor: The Fresh Salt Company S.r.l., 91100 Trapani TR (IT)
(72) Inventor: DAIDONE, SALVATORE, I-91100 Trapani (TR) (IT)
(74) Representative: Frignoli, Luigi
(86) International application number: PCT/EP2005/050883
(87) International publication number: WO 2005/092119

(56) References cited:
- WO-A-02/13631
- WO-A-86/05954
- GB-A- 853 316
- US-A- 2 333 873
- US-A- 2 603 566
- PATENT ABSTRACTS OF JAPAN vol. 1999, no. 04, 30 April 1999 (1999-04-30) & JP 11 021122 A (AKOU KAISUI KK), 26 January 1999 (1999-01-26) cited in the application

## Description

The present invention relates to natural integral food-grade sea salt tablets easily soluble in water, preparable in unit doses, and of sufficient consistency to enable them to be handled. The invention also relates to the method for producing the said tablets.

Food-grade salt is used throughout the world to give the required flavour to foods to which it is added. Many types of food (for example pasta) are cooked in water to which salt quantities are added by a spoon or other method from a container (usually a cardboard box or a bag) in which the salt is contained in the form of powder or of more or less large dimension granules or crystals. The salt quantity added to the food cooking water is hence controlled empirically, hence the cooked food can easily be too insipid or too salty.

As the salt quantity to be added to the food (in particular pasta) cooking water to obtain optimal results is well defined, a balance could be used to weigh the salt quantity to be used at any time, but such a procedure would be too complicated and in practice is never used.

This problem is more evident in those countries in which pasta, in particular durum wheat pasta, is only now becoming a widely eaten food: in such countries, the operator lacks that practical experience which would allow his empirical knowledge of the correct salt quantity to be withdrawn from the salt container and then be fed into the (generally food) pasta cooking water, to achieve good results.

Dispensing spoons or small dispensing ladles containing predetermined salt quantities could be used, but even this procedure has not been and cannot be successful.

WO 02/13631A discloses a granulated edible salt composition comprising alkali metal chlorides whose particle size is less than 500 microns, preferably less than 200 microns, and 5 to 15% water by weight of the total composition. The presence of water is necessary to give a mass whose consistency is surely low, but is sufficient to enable the mass to be extruded to give noodles which optionally can be subsequently dried to bring the moisture to 1 to 7%. It is so possible to obtain granules whose consistency is surely poor and which - especially - have a low solubility into water to which the granulated salt composition has to be added when it is used.

WO03/068006A differs from what is disclosed in WO02/13631A essentially because it provides a salt composition which must contain also 30 ppm iodine, present as a iodine containing salt. The drawbacks are the same which have already been mentioned hereabove.

As it can be understood from the Patent Abstracts of Japan, Vol.1999, No. 4, 30 April 1999 (concerning JP 11 021122A), it is possible to produce salt tablets excellent in water solubility by first mixing rock salt or sea salt particles with a foaming agent and then forming the formulated mixture a t a pressure of 300-1000 Kg/cm²_{.}

In any event the salt is usually stored in the actual container in which it is sold and which, once open, cannot ensure the necessary hygienic conditions, in addition to being bulky.

The main object of the present invention is therefore to provide natural integral sea salt tablets, each tablet corresponding to a well defined constant salt quantity, the tablets having a sufficiently high consistency to enable them to be easily handled and stored, without undergoing damage or breakage.

Another object is to provide salt tablets of the aforesaid type which are easily dissolved in water, in particular pasta (or other food) cooking water, to enable said cooking water to be easily and correctly salted.

These and further objects are attained by salt tablets comprising between 97.5% and 98.8% of NaCl, iodine, K ions, Ca ions and Mg ions, the ions being present as the chlorides and/or sulphates thereof, characterized in that said tablets are formed from dehydrated granules having a particles size distribution between 0.8 mm and 1.1. mm and in that sad Mg ions are present in an amount between 0.4% and 0.9%, the percentages being by weight on a dry basis.

Preferably, said salt comprises between 0.3% and 0.8 % of K ions, between 0.4% and 0.9% of Ca ions and between 0,0005% and 0,0012% of iodine, the percentages being by weight on a dry basis.

Still preferably, said salt is natural integral sea salt for food use.

The tablets of the present invention are obtained by a method by which a salt containing NaCl, Mg ions, K ions, Ca ions (present as chlorides and/or sulphates thereof) and iodine, in the above specified proportions which give the aforedefined tablets, is subjected firstly to grinding treatment and then to dehydration treatment to give salt with particles having a particle size distribution between 0.8 mm and 1.1 mm, metered quantities of the salt obtained in this manner finally being subjected to compression treatment between 160 and 180 bar for a time between about 3 and 4 seconds to form the desired soluble salt tablets ready for use.

Preferably, said salt dehydration treatment is effected in a hot air stream at a temperature between about 170°C and 190°C preferably by a drier of fluidized bed type fed with methane and with separate discharges for the spent air.

The characteristics of the salt tablets and of the method for their preparation according to the present invention will be more apparent from the ensuing description of one embodiment thereof given by way of example.

### EXAMPLE

Unwashed fine sea salt untreated in any way, i.e. pure, is taken from a salt works: neither additives nor anti-agglomerants of any type are added to this salt, which can hence be correctly defined as of natural integral type.

The salt used in this example was produced by natural progressive evaporation and fractional crystallization of sea water in the salt works of The Fresh Salt Co. of Trapani, Sicily, and has the following average analytical dry composition by weight:

| | |
|---|---|
| NaCl | between 97.5% and 98.8% |
| Mg ions | between 0.4% and 0.9% |
| K ions | between 0.3% and 0.8% |
| Ca ions | between 0.4% and 0.9% |
| Iodine | between 0.0005% and 0.0012% |

The sea salt obtained in this manner is subjected to grinding treatment using a mill with rotary rollers constructed of stainless steel and adjustable to achieve the required particle size distribution.

The salt thus obtained is subjected to dehydration treatment in a hot air stream at a temperature between 170°C and 190°C, preferably at about 180°C, by means of a fluidized bed drier fed with methane and with separate discharges for the spent air.

This salt can be used for tablet formation and has a particle size distribution between 0.8 mm and 1.1 mm: in this respect it has been found that a different particle size distribution would not enable the powder or granule mass to be compacted to form tablets having the hardness and consistency necessary to obtain the results required of the present invention.

For tablet formation, a hydraulic press suitable for treating food products is used, for example a 44 impression press with a rated power of 200 bar/cm². Compression is effected at 160-180 bar for a time of 3-4 seconds.

The stated pressure (160-180 bar) and pressing time (3-4 seconds) are necessary to obtain tablets of ideal consistency for tablet firmness and solubility.

In support of this it has been shown that on using a constant pressing time still of 3 seconds, if the set pressure is 110 bar it is not possible to obtain tablets of appreciable consistency; if the pressure is 140 bar, the tablets obtained have little consistency; if the pressure is 170 bar the tablets have optimal consistency and solubility; if the pressure is 200 bar, the tablets have high consistency but little solubility.

The aforegoing points are critical in obtaining tablets which easily dissolve in water while possessing a consistency and compactness which prevent them from powdering (i.e. disintegrating) during packaging, transport and storage.

It should be noted that the quantity (between 0.4% and 0.9% by weight on a dry basis) of magnesium (in the form of its natural salts) which must be present in the salt used for tablet formation is of critical importance, as this ensures excellent solubility of the tablet: the use of a different salt, in particular with a lower percentage of magnesium, would substantially reduce tablet solubility, with negative consequences in obtaining the required flavour of the water to which the tablets are added.

If the tablets were to be obtained using mineral salt or rock salt (which is the type of salt commonly present in food supermarkets) it would not be possible to obtain tablets with the desired characteristics, especially as said salt does not contain magnesium.

With the aforedescribed composition and production method, tablets can be obtained of exactly predetermined weight, specific for easy or perfect salting of the water for cooking predetermined quantities of durum wheat pasta.

For example, a tablet weighing 9.5 g can be used to salt 100 g of pasta in 1.5 litres of water: if the quantity of pasta to be cooked is different, more tablets can be used or tablets of greater weight can be produced.

The tablets should be added to the water at the moment in which it boils, but before adding the pasta to the saucepan.

The tablets can be packaged and stored in the manner considered most suitable. For example they can be packaged in tin cans of 500 g (containing 53 tablets) provided with a sealing cap to preserve the integrity of the tablets which, being hygroscopic, cannot withstand moisture.

## Claims

1. Water-soluble salt tablets, comprising between 97.5% and 98.8% of NaCl, iodine, K ions, Ca ions and Mg ions, the ions being present as the chlorides and/or sulphates thereof, **characterized in that** said tablets are formed from dehydrated granules having a particles size distribution between 0.8 mm and 1.1. mm and **in that** sad Mg ions are present in an amount between 0.4% and 0.9%, the percentages being by weight on a dry basis

2. Water-soluble salt tablets according to claim 1, **characterized by** comprising between 0.3% and 0.8% of K ions, between 0.4% and 0.9% of Ca ions and between 0.00053% and 0.0012% of iodine, the percentages being by weight on a dry basis.

3. Water-soluble salt tables according to claims 1 or 2, **characterized in that** the same are of predetermined weight.

4. Tablets as claimed in claims 2 or 3, **characterised in that** said salt is natural integral sea salt for food use.

5. A method for producing water soluble tablets of a food-grade salt, **characterised in that** a salt whose composition is as specified in claims 1 or 2, is subjected firstly to grinding treatment and then to dehydration treatment to give a salt with particles having a particle size distribution between 0.8 mm and 1.1 mm, metered quantities of the salt obtained in this manner finally being subjected to compression treatment between 160 and 180 bar for a time between about 3 and 4 seconds to form the water soluble salt tablets.

6. A method as claimed in claim 5, **characterised in that** said salt dehydration treatment is effected in a hot air stream at a temperature of between about 170°C and 190°C.

7. A method as claimed in claims 5 or 6, **characterised in that** said dehydration treatment in hot air is by a fluidized bed drier fed with methane and with separate discharges for the spent air.

## Patentansprüche

1. Tabletten aus wasserlöslichem Salz, umfassend zwischen 97,5% und 98,8% NaCl, Iod, K-Ionen, Ca-Ionen und Mg-Ionen, wobei die Ionen als Chloride und/oder Sulfate davon vorliegen, **dadurch gekennzeichnet, dass** die Tabletten aus dehydratisierten Körnchen mit einer Teilchengrößenverteilung zwischen 0,8 mm und 1,1 mm gebildet sind und dass die Mg-Ionen in einer Menge zwischen 0,4% und 0,9% vorliegen, wobei sich die Prozentangaben auf das Gewicht auf Trockenbasis beziehen.

2. Tabletten aus wasserlöslichem Salz nach Anspruch 1, **dadurch gekennzeichnet, dass** sie zwischen 0, 3% und 0,8% K-Ionen, zwischen 0,4% und 0,9% Ca-Ionen und zwischen 0,00053% und 0,0012% Iod umfassen, wobei sich die Prozentangaben auf das Gewicht auf Trockenbasis beziehen.

3. Tabletten aus wasserlöslichem Salz nach Anspruch 1 oder 2, **dadurch gekennzeichnet, dass** sie ein vorbestimmtes Gewicht aufweisen.

4. Tabletten nach Anspruch 2 oder 3, **dadurch gekennzeichnet, dass** das Salz natürliches vollständiges Meersalz für die Verwendung als Lebensmittel ist.

5. Verfahren zur Herstellung von wasserlöslichen Tabletten aus einem Salz in Nahrungsmittelqualität, **dadurch gekennzeichnet, dass** ein Salz mit der in den Ansprüchen 1 oder 2 angegebenen Zusammensetzung zunächst einer Mahlbehandlung und anschließend einer Dehydratisierungsbehandlung unterworfen wird, um ein Salz zu erhalten mit Teilchen mit einer Teilchengrößenverteilung zwischen 0,8 mm und 1,1 mm, wobei abgemessene Mengen des auf diese Weise erhaltenen Salzes abschließend einer Komprimierungsbehandlung zwischen 160 und 180 Bar für eine Zeitdauer zwischen etwa 3 und 4 Sekunden unterworfen werden, um die Tabletten aus wasserlöslichem Salz zu bilden.

6. Verfahren nach Anspruch 5, **dadurch gekennzeichnet, dass** die Salzdehydratisierungsbehandlung in einem heißen Luftstrom bei einer Temperatur zwischen etwa 170°C und 190°C durchgeführt wird.

7. Verfahren nach Anspruch 5 oder 6, **dadurch gekennzeichnet, dass** die Dehydratisierungsbehandlung in heißer Luft durch einen Fließbetttrockner erfolgt, der mit Methan beschickt wird und separate Auslässe für die verbrauchte Luft aufweist.

## Revendications

1. Pastilles de sel solubles dans l'eau, comprenant entre 97,5 % et 98,8 % de NaCl, de l'iode, des ions K, des ions Ca et des ions Mg, les ions étant présents en tant que chlorure et/ou sulfates de ceux-ci, **caractérisées en ce que** lesdites pastilles sont formées à partir de granules déshydratées ayant une distribution de taille de particule comprise entre 0,8 mm et 1,1 mm et **en ce que** lesdits ions Mg sont présents en une quantité comprise entre 0,4 % et 0,9 %, les pourcentages étant en poids sur une base sèche.

2. Pastilles de sel solubles dans l'eau selon la revendication 1, **caractérisées en ce qu'**elles comprennent entre 0,3 % et 0,8 % d'ions K, entre 0,4 % et 0,9 % d'ions Ca et entre 0,00053 % et 0,0012 % d'iode, les pourcentages étant en poids sur une base sèche.

3. Pastilles de sel solubles dans l'eau selon la revendication 1 ou la revendication 2, **caractérisées en ce que** celles-ci sont d'un poids prédéterminé.

4. Pastilles selon la revendication 2 ou la revendication 3, **caractérisées en ce que** ledit sel est un sel de mer entier naturel pour une utilisation alimentaire.

5. Procédé de production de pastilles solubles dans l'eau d'un sel à qualité alimentaire, **caractérisé en ce qu'**un sel dont la composition est telle que spécifiée dans la revendication 1 ou la revendication 2, est soumis tout d'abord à un traitement de broyage puis à un traitement de déshydratation pour donner un sel avec des particules ayant une distribution de taille de particule comprise entre 0,8 mm et 1,1 mm, des quantités dosées du sel obtenu de cette manière étant enfin soumises à un traitement de compression entre 160 et 180 bars pendant une période comprise entre environ 3 et 4 secondes pour former les pastilles de sel solubles dans l'eau.

6. Procédé selon la revendication 5, **caractérisé en ce que** ledit traitement de déshydratation de sel est effectué dans un courant d'air chaud à une température comprise entre environ 170 °C et 190 °C.

7. Procédé selon la revendication 5 ou la revendication 6, **caractérisé en ce que** ledit traitement de déshydratation dans l'air chaud se fait par un séchoir à lit fluidisé alimenté en méthane et décharges séparées pour l'air utilisé.
